Europäisches Patentamt

European Patent Office

Office européen des brevets

(11) Publication number: **0 500 193 A1**

## EUROPEAN PATENT APPLICATION

(21) Application number: **92201162.2**

(22) Date of filing: **29.01.87**

(51) Int. Cl.5: **G06F 9/38**

This application was filed on 24 - 04 - 1992 as a divisional application to the application mentioned under INID code 60.

(30) Priority: **29.01.86 US 823776**

(43) Date of publication of application:
**26.08.92 Bulletin 92/35**

(60) Publication number of the earlier application in accordance with Art.76 EPC: **0 290 465**

(84) Designated Contracting States:
**CH DE FR GB IT LI NL**

(71) Applicant: **DIGITAL EOUIPMENT**

**CORPORATION**
**111 Powdermill Road**
**Maynard Massachusetts 01754-1418(US)**

(72) Inventor: **Clark, Douglas W.**
**38 Saltonstall Road**
**Medford Massachusetts 02155(US)**
Inventor: **Bernstein, Debra**
**443 Peakham Road**
**Sudury Massachusetts 01776(US)**

(74) Representative: **Goodman, Christopher et al**
**Eric Potter & Clarkson St. Mary's Court St.**
**Mary's Gate**
**Nottingham NG1 1LE(GB)**

(54) Apparatus and method for execution of branch instructions.

(57) In a pipelined data processing system using microinstructions from an control unit, the method of implementing a conditional branch macroinstruction involves the sequence of microinstructions in which the potential instruction sequence is prepared for execution while the original instruction sequence continues in execution even though the results of the condition testing are not determined. When the condition is determined to be false, the instruction sequence in execution is continued and the retrieved instruction sequence is not activated. When the condition is determined to be true, the new instruction sequence can be executed immediately and the results of the original (and erroneous) sequence can be discarded. In conditional branch macroinstructions where the probability of branching is large, an unconditional branch instruction is executed to place the most probable instruction sequence in immediate execution and the conditional branch instruction, described above, is executed to determine the result of the condition.

FIG.8a

FIG.8b

## BACKGROUND OF THE INVENTION

### 1. Field of the Invention

This invention relates generally to data processing systems and, more particularly, to data processing systems in which the implementation of instructions is divided into a plurality of suboperations permitting an overlap in the execution of consecutive instructions, and typically referred to as pipelining the execution of the instructions. This technique is frequently used in the data processing unit subsystems to increase the rate of instruction execution. The present invention reduces the delays encountered in the execution of conditional branch instructions.

### 2. Description of the Related Art

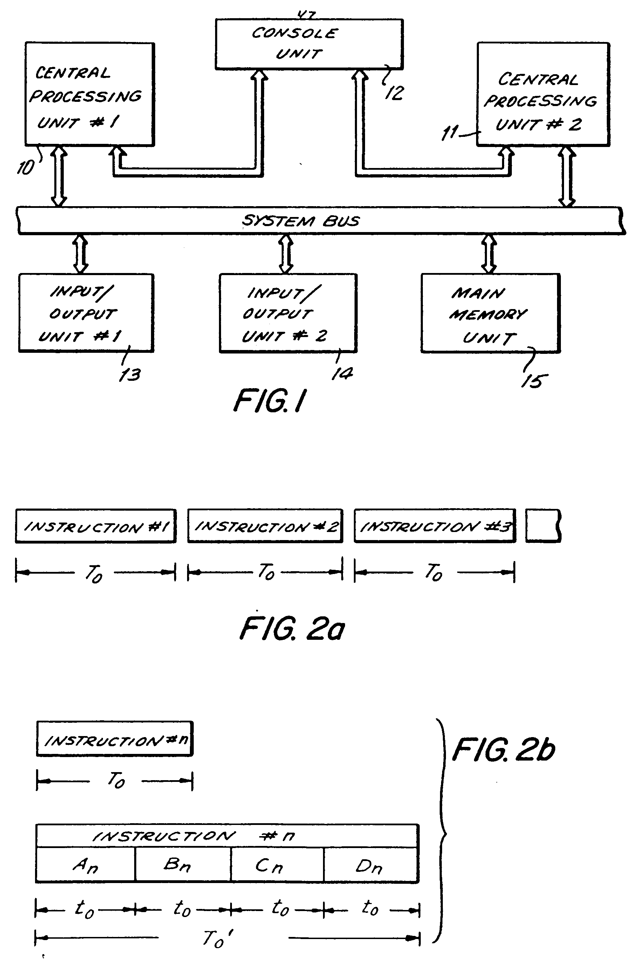

Referring to Figure 1, a typical data processing system is shown. The data processing system includes at least one central processing unit 10 ( or 11), at least one input/output device 13 (or 14), a memory unit 15 and a system bus 19 coupling the plurality of subsystems or units of the data processing system. The central processing unit processes groups of logic signals according to software and/or firmware instructions. The logic signal groups to be processed are typically stored in the memory unit 15. A console unit 12 can be coupled to the central processing unit(s) and includes the apparatus and stored instructions to initialize the system and can function as a terminal during the operation of the data processing system. The input/output units provide the interface of the data processing system to terminal units, mass storage units, communication units, and any other units to be coupled to the data processing system that exchange logic signal groups with the system. The present invention relates to the operation of the central processing unit, and provides an apparatus and method for more efficient execution of certain portions of the programs controlling the processing of data signal groups.

In a data processing system, such as is illustrated in Figure 1, the actual manipulation of data signal groups takes place under the control of a group of related instructions that is generally called a program. These instructions are executed in a sequence. Referring next to Figure 2a, the execution of a series of instructions according to the related art is illustrated. During a first time interval, $T_0$, the instruction #1 is executed by a central processing unit subsystem. After the first instruction is executed, a next instruction #2 in the sequence is executed by the central processing unit subsystem during the second time interval, $T_0$. Upon completion of instruction #2, the data processing unit executes instructions #3 during the third time interval $T_0$. In order to maintain an orderly execution of instructions, the interval for the execution of any instruction by the data processing unit requires a predetermined period of time. If the execution time for an instruction can have a variable length, complex apparatus must then be included in the central processing unit to coordinate the exchange of data signal groups between the central processing unit and the other subsystems of the data processing system. Thus, the period for execution of the three instructions will generally be three times the basic time period. It will be clear that the basic time interval must be of sufficient duration to permit the execution of the lengthiest instruction in the instruction set unless the execution of instructions is implemented using a more sophisticated technique as described below.

IBM Technical Disclosure Bulletin, Volume 22, No. 12, May 1980, pages 5536-3358 and European Patent No. A-162 778 disclose a method for implementing a conditional branch sequence of overlapped microinstructions, including the step of initiating execution of a conditional branch microinstruction for determining which of first and second sequences of microinstructions are to be executed in dependence on the presence of a predetermined condition at a predetermined time.

U.S. Patent No. 4,200,927 discloses only prefetching and pre-decoding of instructions outside an execution unit prior to completion of a conditional branch.

In order to provide for faster operation of the data processing system, a technique for dividing the execution of an instruction into the execution of a plurality of instruction segments has been devised. The instruction segments are components of a microinstruction and a related group of microinstructions implements a microinstruction. When the apparatus implementing the segments is organized appropriately, the execution of the instructions can be performed in an overlapping manner. This technique is referred to as "pipelining" the execution of an instruction set. While the execution of each pipelined instruction can take a longer period of time than is required for the execution of a nonpipelined instruction, because of the additional apparatus required for the division of the instruction into the instruction segments, an instruction stream can be executed faster than is possible for the nonsegmented instructions. In Figure 2b, the division of an instruction into a plurality of segments is shown. It will be understood that each segment relates to a separate and independently operating group of components in the central processing unit. Registers and gates, according to principles well-known in the art of data processing system design, can implement the operation of a group of components executing a particular segment. The subinterval, $t_0$, for each segment must be sufficiently long to permit the execution of all possible segments in each apparatus group.

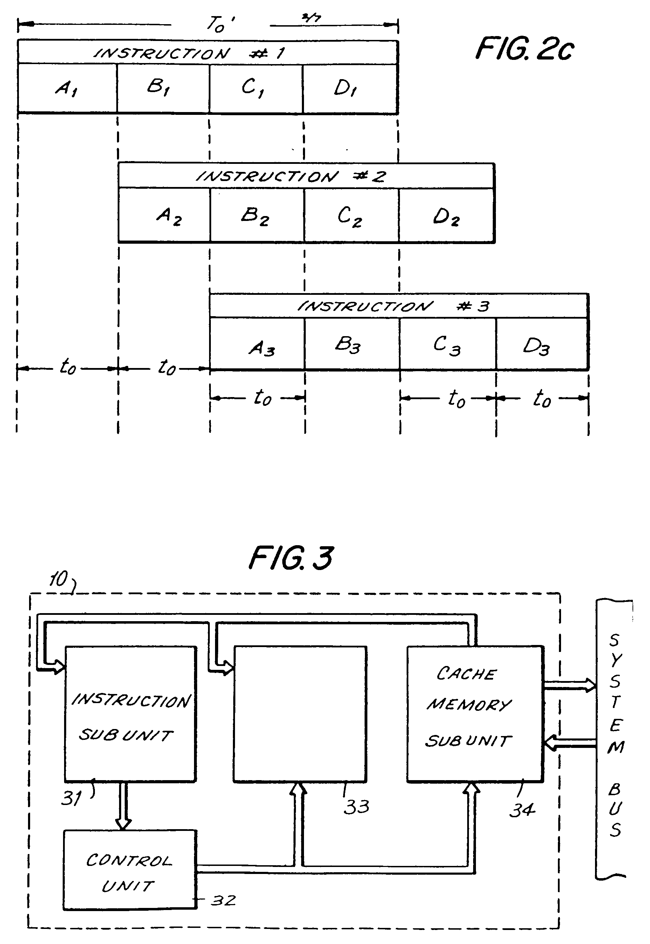

Referring next to Figure 2c, the resulting increase in the rate of execution of a sequence of instructions possible through the use of pipelining techniques is illustrated. Instruction #1 is now completed in the new (and possibly longer) time period of $T'_0$ equals n times $t_0$, where $t_0$ is the subinterval required for the execution of each instruction segment and where n is the number of instruction segments required for the execution of each instruction. The next instruction in the sequence, instruction #2, begins an interval $t_0$ after the beginning of instruction #1. The third instruction in the sequence, instruction #3, then begins an interval $t_0$ thereafter. Each instruction can take the increased amount of time for the execution. However, once the initial interval for the completion of the first instruction has passed, an instruction is completed after each interval $t_0$. Thus, for a sequence of instructions, the execution of the sequence can be accelerated even though the individual instruction can take an increased length of time to execute.

Although the pipelining technique can provide for more rapid execution of an instruction sequence, this technique loses efficiency with the occurrence of conditional "branch" instructions in an instruction sequence. The branch instruction involves the switching from one instruction sequence to a second instruction sequence. The conditional branch instruction involves the testing of a quantity against a predetermined condition. Depending on the result of the test, the instruction sequence can continue in the present sequence or the instruction sequence can jump or branch to a new instruction sequence. For the instruction sequence being executed as shown in Figure 2a, instruction #1 can be the instruction testing the condition, and the particular next sequential instruction, illustrated by instruction #2, can be determined by the result of instruction #1. In the case of the pipelined execution of the instruction set as illustrated in Figure 2c, the result of the condition testing procedure may not be available until instruction segment D of instruction #1. However, instruction #2 will, in normal operation, already have begun execution and instruction segments A and B of instruction #2 can have been completed.

In order to address the problem of branching in pipelined execution of instruction sequences, the typical approach has been to suspend the execution of the instruction sequence until the branch condition has been tested. Once the branch condition has been tested, then the execution of the correct instruction sequence, i.e. the original instruction sequence or the new instruction sequence, is initiated. This strategy provides an inefficient use of the central processing unit and results in delays in the instruction execution sequence. Not only is a delay incurred in waiting for the testing of the condition, but a further delay is encountered as the plurality of instruction segments is executed prior to the completion of the instruction, sometimes referred to as filling the pipeline.

A need has therefore been felt for apparatus and method of operation for pipelined execution of an instruction sequence that would minimize the effect of a branch instruction on the system performance without requiring extensive additional apparatus and minimizing the compromise in improved instruction execution resulting from the use of the pipelined instruction sequence execution.

## SUMMARY OF THE INVENTION

It is an object of the present invention to provide an improved data processing system.

It is a further object of the present invention to provide an improved data processing unit for the execution of an instruction sequence.

It is a further object of the present invention to provide an improved data processing unit for the pipelined execution of an instruction sequence.

It is a more particular object of the present invention to provide a data processing unit having a pipelined instruction sequence execution in which either the original instruction sequence or the branch instruction sequence can be initiated before the determination of the occurrence of the condition has been completed.

The aforementioned and other objects are accomplished, according to the present invention, by providing a data processing unit with apparatus for recognizing the occurrence of a conditional branch instruction. Upon recognition of the conditional branch instruction, the data processing unit initiates the retrieval of the first instruction in sequence to be executed when the branch condition is determined to be true. The next instruction executed by the data processing system is the instruction that would be executed if the branch condition is determined to be false, i.e. the original instruction sequence is continued. While this instruction (and any subsequent instructions in the original instruction sequence) is being executed, the data processing system is preparing to execute the instruction sequence determined by the branch condition (if true). When the determination is made with respect to the branch condition, the data processing unit can continue execution of the original instruction sequence already in execution if the condition is false. When the branch condition is true, then the activity of the data processing unit in preparing for the execution of the new instruction sequence is utilized and the execution of the new instruction sequence replaces the execution of the original instruction sequence that is in progress. For selected conditional branch instructions, for which there is a high probability that the branch condition will occur, the central processing unit executes an unconditional branch instruction to the new sequence. After the preparation for the new instruction sequence is completed, the condition is tested. If the condition (as originally interpreted) is true, the central processing unit continues to execute the new instruction sequence. Otherwise, the instruction sequence execution reverts to the original instruction sequence.

These and other features of the present invention will be understood upon reading of the following description along with the drawings.

BRIEF DESCRIPTION OF THE DRAWINGS

FIG. 1 is a block diagram of the components of a data processing system capable of utilizing the present invention.

FIG. 2a is an illustration of the execution of an instruction sequence according to the related art; FIG 2b is an illustration showing how an instruction can be divided into a plurality of instructions segments; and FIG 2c illustrates how a pipelined instruction execution can provide provide for increased performance by a central processing unit.

FIG. 3 is a block diagram of a data processing system implementing the pipelined execution of an instruction sequence.

FIG. 4 illustrates the execution of an unconditional branch instruction.

FIG. 5 illustrates the execution of a conditional branch instruction in which the processing of further instructions is halted until the determination of the condition has been completed.

FIG. 6 illustrates the execution of a conditional branch instruction according to the present invention.

FIG. 7 illustrates the execution of a conditional branch instruction, for which the branch to the new instruction sequence is highly probable, according to the present invention.

FIG. 8a is a block diagram of the central processing unit along with associated signals illustrating the operation of a portion of the implementation of a conditional branch macroinstruction.

FIG. 8b is a block diagram of the central processing unit along with associated signals illustrating the operation of the remainder of the conditional branch macroinstruction.

DETAILED DESCRIPTION OF THE PREFERRED EMBODIMENT

1. Detailed Description of the Figures

Figure 1 and Figure 2 have been described in relation to the related art.

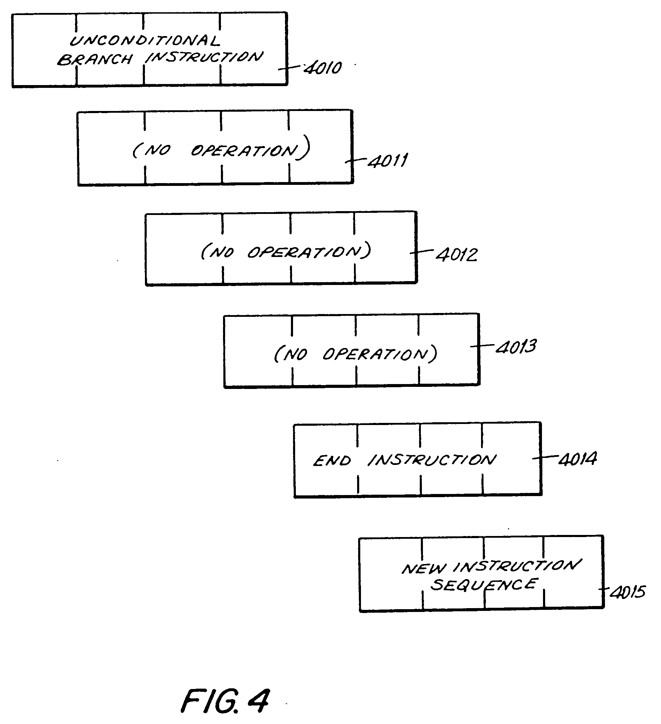

Referring next to Figure 3, an organization for a central processing unit 10 implementing the pipelined execution of an instruction sequence is shown. The central processing unit is divided into an instruction subunit 31 and associated control unit 32, an execution unit 33 and a cache (or local) memory unit 34. The cache memory unit 34 is coupled to the system bus 19 and exchanges groups of logic signals with the other subsystems of the data processing system by means of the system bus under control of the control unit 32. The execution unit 33, again under control of the control unit 32, performs the manipulation of the data signal groups that is defined by the instructions being executed. The instruction unit receives the instructions to be executed and reformats the instructions in a manner that can be used to control the operation of the central processing unit. The reformatted instructions, or portions thereof, are applied to the control unit 32 to provide the configuration of the logic elements of the data processing unit to implement the operation defined by the instruction.

The structure defined above supports the use of microinstructions to implement macroinstructions. A macroinstruction can be implemented by a single microinstruction or by a plurality of microinstructions depending on the complexity, the nature of the apparatus of the central processing unit, and similar parameters. It is the microinstructions that are divided into microinstruction segments, as shown in Fig. 2b. Each microinstruction includes "micro-orders" that control the groups of components.

Referring to the simplified division of the data processing unit shown in Figure 3 and for purposes of illustrating the invention, the length of time for each unit of the central processing unit to complete its portion of an execution of an instruction will be taken to be equal. Thus, for an instruction to be executed by the data processing unit, the execution of a set of instructions is illustrated in Figure 2c. The first instruction will be processed by the instruction unit during a first interval $t_0$. During the third interval $t_0$, the cache memory unit can be processing instruction #1, the execution unit can be processing instruction #2, and the instruction unit can be processing instruction #3. This three level pipeline can continue as long as instructions are entered into the instruction unit.

It will be clear that the division of the data processing unit into the indicated functional units is, in general, not sufficient to provide an operable pipeline configuration. Each of the functional units described above can require a plurality of suboperations to complete the execution of each instruction. For purposes of illustration, a pipeline that includes four segments, instead of the three segments described with reference to Figure 3, will be used to describe the invention.

Referring next to Figure 4, the execution of an unconditional branch instruction is illustrated. The unconditional branch instruction forces the central processing unit to execute a new instruction sequence beginning at the instruction specified by the unconditional branch instruction. As indicated in Figure 4, the unconditional branch macroinstruction 4010 is initiated, and the first of its corresponding microinstructions causes the apparatus of the central processing unit to retrieve the first macroinstruction of the target sequence of instructions. The next three instructions in the sequence instructions 4011, 4012, 4013, are "no operation" instructions in which the signals from the control unit do not result in activity that contributes to the execution of the instruction. Microinstruction 4014 includes the "end instruction" micro-order completing the implementation of the unconditional branch macroinstruction and causing the central processing unit to begin execution of the target sequence of macroinstructions.

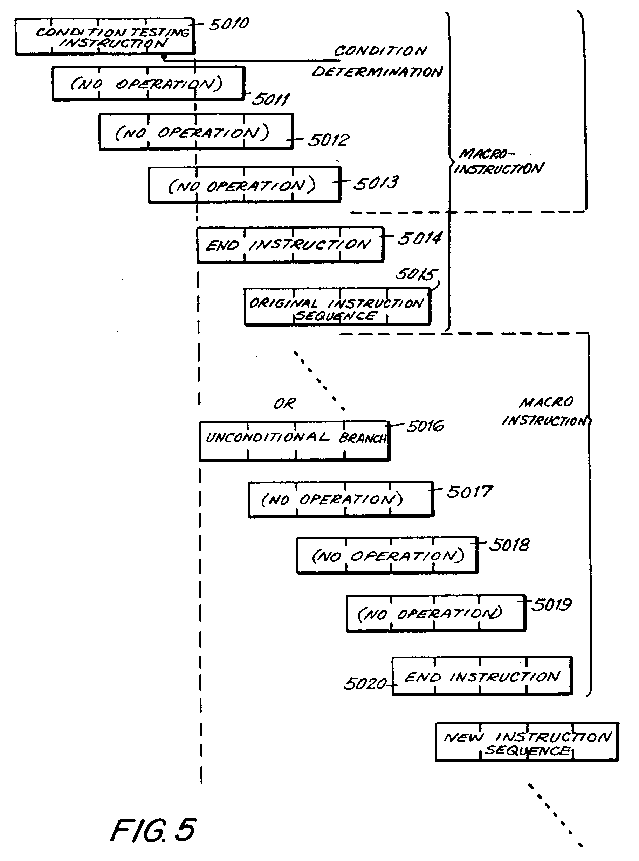

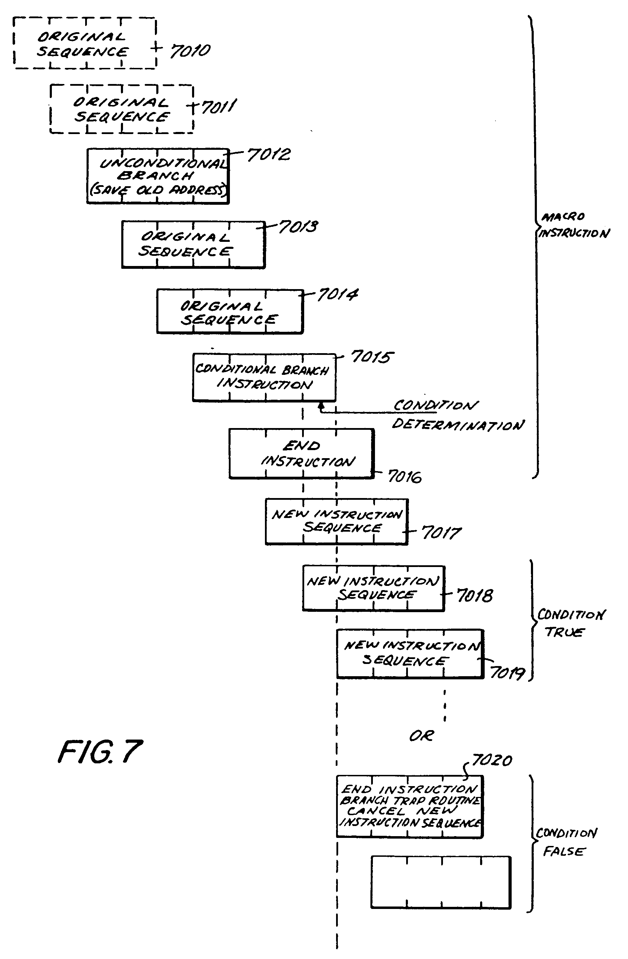

Referring next to Figure 5, the execution of a conditional branch macroinstruction instruction, in which the present invention is not used, is illustrated. In this process, the first microinstruction implementing the macroinstruction can be condition testing microinstruction 5010. This instruction tests the condition of the conditional branch instruction. Because the result of the condition is not known until the end of the instruction, execution of further processing is suspended until the results of the test have been determined. Thus, microinstructions 5011, 5012 and 5013 are "no operation" instructions. The conditional branch instruction determines a condition that can be true or false. If the condition is true, then the branch is made and the new instruction sequence is executed. In the example of Figure 5, the unconditional branch instruction 5016 is executed and the instruction sequence of Figure 4 is implemented. If the condition is false, then execution of the original instruction sequence is continued. As illustrated in Figure 5, instructions 5015, etc. in the original instruction sequence are now executed.

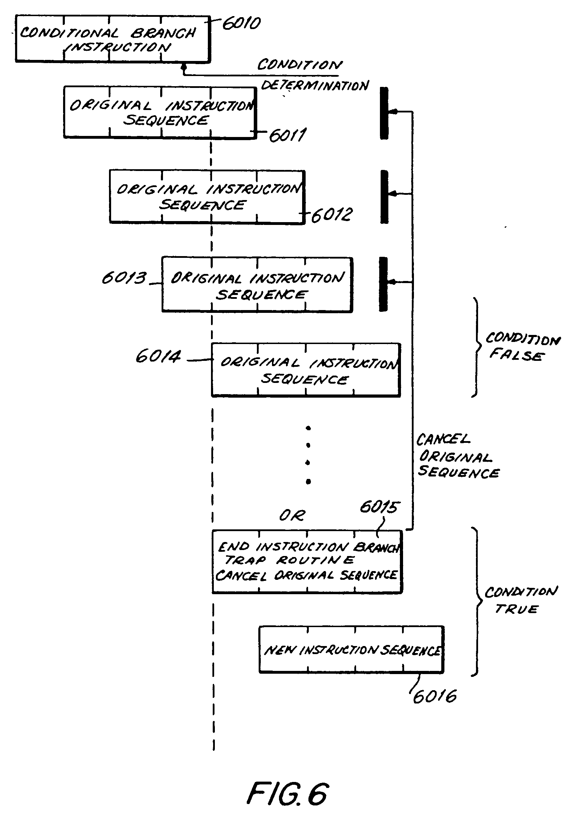

Referring next to Figure 6, the execution of a conditional branch instruction according to the present invention is shown. Although this instruction sequence of the present invention implements a conditional branch macroinstruction, the individual microinstructions are not identical with the conditional branch instruction of Figure 5. The first microinstruction 6010 of the sequence includes the conditional branch micro-order. The instruction 6010, in addition to testing the condition, provides an address to the cache memory unit of the first instruction in the new sequence of instructions, in a manner that the unconditional branch instruction would be implemented. However, in distinction to the unconditional branch instruction in which three "no operation" instructions are found after the branch instruction, in the present invention, three microinstructions implementing the original sequence are executed. By the end of the first segment of the third original sequence instruction, the determination of the truth or falsity of the condition has been determined, i.e. as indicated by the arrow in instruction 6010 in Figure 6. If the condition is false, the original microinstruction sequence continues as illustrated by instruction 6014. If the condition is true, then a one microinstruction branch trap routine 6015 is executed that changes the instruction sequence in execution to the new sequence as illustrated by instruction 6016. In addition, the results of the instructions 6011, 6012 and 6013 are irrelevant and are discarded when the new sequence is selected by the condition.

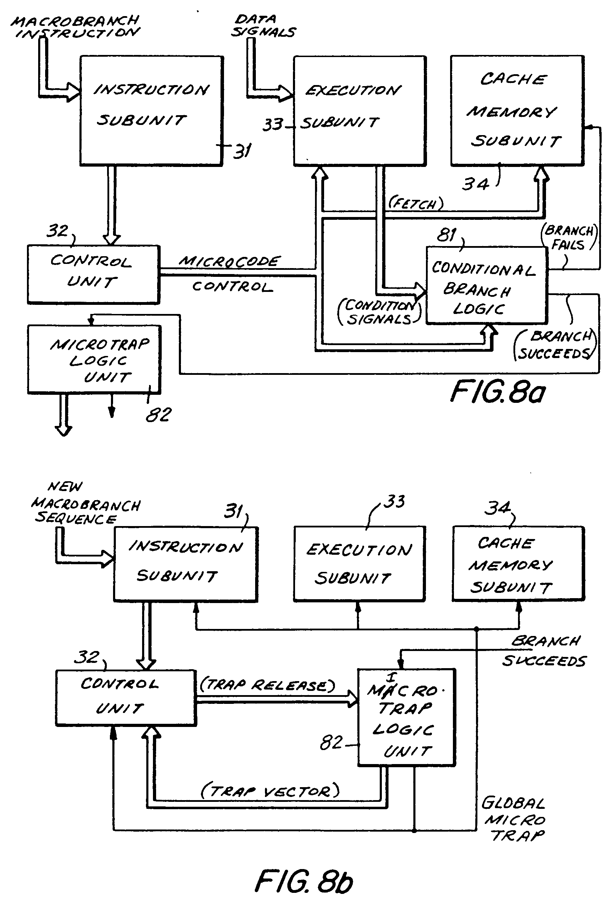

Referring next to Figure 7, the execution of the conditional branch instruction, of the type having a high probability that the branch to the new sequence will be implemented, is illustrated. This type of macroinstruction typically involves control of an instruction loop, where a multiplicity of macroinstructions will typically be executed repeatedly before the macroinstruction sequence continues in a consecutive instruction sequence. Instructions 7010 and 7011 are parameter determining microinstructions. Instruction 7012 determines the destination address if the condition is determined to be true. Simultaneously with the determination of the destination address, instruction 7012 is also an unconditional branch instruction causing the execution of the new or target instruction sequence. However, this conditional branch instruction provides for the saving of the next address of the old sequence. As illustrated in Figure 4, the fourth instruction after the unconditional branch instruction 7012, instruction 7016, contains the end instruction micro-order. Then the next following instruction 7017 is the first instruction of the new sequence. Rather than three "no operation" instructions in the unconditional instruction branch sequence, one of the instructions, 7015, is a conditional branch instruction of the type illustrated in Figure 6. In addition, instructions 7013 and 7014 can be part of a microinstruction sequence implementing a macroinstruction. It will be clear that the situation with respect to the condition will now be reversed, the unconditional branch instruction causing the potential new instruction sequence to be the active instruction sequence. However, should the relatively rare situation, where the original sequence was to be continued, be identified by the conditional branch instruction, the address of that instruction was saved in instruction 7012. Also when the original instruction sequence is to be continued, the results of the executed new sequence instructions, 7017, 7018 and 7019, will not be used.

Referring next to Figure 8a, a block diagram of the apparatus executing a conditional branch macroinstruction is shown. The macroinstruction(s) are applied to instruction subunit 31. Each macroinstruction is decoded and the resulting address signals, implementing the macroinstruction, are applied to control unit 32. Based on the applied address signals, microcode control signals from control unit 32 are applied to the execution subunit 33, the cache memory subunit 34 and the conditional branch logic 81. Conditional branch logic 81 is implemented to receive condition signals from the execution subunit 33 and, in response to the condition signals and the applied microcode control signals, provide one of two output signals. The microcode control signals cause the execution subunit 33 to process data signals and to produce condition signals that are applied to the conditional branch logic 81. As a result of the applied condition signals and the microcode control signals, a resulting output signal (or signals) is generated from the conditional branch logic unit 81. In the present invention, when the condition is true (i.e. the branch succeeds), a signal is applied to a selected portion of a microtrap logic unit 82. When the condition is false (i.e. the branch fails), signals are applied to the cache memory subunit 34 that cause the fetch operation, initiated by the control unit 32 in response to signals from the instruction sub unit 31, to be aborted.

Referring to Figure 8b, the result of the application of a signal to the microtrap logic, i.e. the branch succeeds, is shown. The microtrap logic unit 82 sends a global trap signal to the instruction subunit 31, the execution subunit 33, the cache subunit 34 and the control unit 32. The result of the global trap signal on the instruction subunit 31, the execution subunit 33 and the cache memory subunit 34 is to abort the results of the microinstructions for which execution was initiated after the conditional branch microinstruction. The effect of the global trap signal on the control unit 32 is to cause an address (trap vector), resulting from the "condition is true" signal being applied to the microtrap logic unit 82, from the microtrap logic to be used by the control unit 32. The result of the trap vector is, inter alia, to provide a trap release signal to the microtrap logic unit 82 that terminates the routine being executed by the microtrap logic unit 82 as a result of the application of the "condition is true" signal.

## 2. Operation of the Preferred Embodiment

The delays involved in the conditional branch instruction are two-fold. First, the execution of the appropriate instruction sequence cannot be undertaken with certainty until a determination has been made as to the whether the condition is true or false. Second, even once the determination has been made with respect to the fulfillment of the condition, the various segments of the instruction must be processed, before the advantages of the rapid execution by a processor pipeline can be realized. To avoid the delays that are involved with a conditional instruction in a pipeline type data processing environment, the present invention categorizes the conditional branch instruction into two groups.

In the first group of conditional branch instructions, the most probable result of the testing of the condition is unknown. The invention processes this type of conditional branch instruction by forcing the next instruction to be a retrieval of the data at the address that would be the result of an actual branch in the program as a result of the instruction. Because this retrieval takes a plurality of microinstruction cycles to execute, the instructions that are executed in this time period are instructions from the original sequence that would be processed if a program branch did not take place as a result of the condition testing. Thus, when the result of testing the condition is established, if the condition is false, i.e. the original program sequence is to be continued, then the data in the process of being retrieved is cancelled and the original instruction sequence, already in execution, is continued. Indeed, according to the implementation in Figure 6 , only one microinstruction cycle is used. If, on the other hand, the condition is true and the new sequence of instructions is to be executed, then the process of retrieving the first signal group of the new instruction sequence has been in progress for three microinstruction cycles, and the execution of this instruction sequence has improved with respect to waiting for result of the condition test prior to further processor activity. It will be clear that, if the codition is true, the results of the instruction execution sequence of the original program sequence taking place during the testing of the condition has become irrelevant and must be discarded. Thus, it will be clear that the speed of the conditional branch instruction of the present invention uses only one system clock cycle when the condition is false, and yet executes the instruction as fast as an unconditional branch instruction when the condition is true.

With respect to the second group of instructions illustrated in Figure 7, upon identification of a conditional branch instruction associated with this second group, the assumption is made that the branch to the new instruction sequence is the most probable result of the testing of the condition. As a result of this assumption, the conditional branch is interpreted as an unconditional branch instruction and the activity necessary for the performing the branching operation is executed even though the condition has not been tested. After the new instruction sequence has been prepared for execution, then the instruction testing the condition is executed. However, the condition testing procedure is now reversed, the condition for continuation has now become the condition for execution of a new instruction sequence even though that instruction sequence is in fact the original instruction sequence. The execution of the conditional branch instruction takes place in the same manner as the execution of the conditional branch instruction illustrated in Figure 6. It will be clear that the assumption that the branch is the most probable result of the testing of the condition must in fact be true in a majority of cases. This result arises because, as will be apparent from Figure 7, two alterations in the instruction sequence must take place when the original condition is false. The conditional branch instruction improves the execution of the instruction by forcing an unconditional branch micro-order to be executed as soon as the second (branch) address is known and by using the previously described conditional branch instruction to minimize the impact of the (relatively unlikely) return to the original instruction sequence.

The foregoing description is included to illustrate the operation of the preferred embodiment and is not meant to limit the scope of the invention. The scope of the invention is to be limited only by the following claims. From the foregoing description, many variations will be apparent to those skilled in the art that would yet be encompassed by the spirit and scope of the invention.

**Claims**

1. A circuit arrangement for implementing a conditional branch macroinstruction in a microprogrammed central processing unit having an instruction subunit (31) and an execution subunit (33) connected to receive instruction signals and data signals respectively from a cache memory unit, comprising, and characterized in that:

control logic means (32) for sending an execution control signal to said execution subunit to initiate execution of an unconditional branch microinstruction and to initiate storage of an address which would have been executed next if said unconditional branch had not been executed;

control logic means (32) for sending a first control signal to said execution subunit for initiating output of a condition signal by said execution subunit, a second control signal to said cache memory subunit for initiating output of instruction signals by said cache memory subunit, and a third control signal for initiating determination of the state of said condition signal, said control signals being output in response to a conditional branch microinstruction;

branch logic means (81) for determining the state of said condition signal in response to receipt of said third control signal, said branch logic means outputting a first decision signal if said condition signal is in a first predetermined state;

a trap logic means (82) for cancelling results obtained by executing a microinstruction received by said control logic means subsequent to said condition branch microinstruction, in response to said first decision signal, and to restart execution at said address.

2. The circuit arrangement as defined in claim 1, characterized in that:

said branch logic means output a second decision signal to said cache memory unit if said condition signal is in a second predetermined state, for continuing activity in said cache memory unit initiated by said second control signal.

3. A method of operating a computer to execute a macro-instruction conditional branch instruction, and said computer having a pipelined processor, characterized in that:

executing an unconditional branch instruction (7012);

beginning execution of a sequence of instructions from said unconditional branch in said pipeline (7013,7014);

executing a conditional branch instruction (7015) to determine if said unconditional branch instruction should have been executed;

aborting results from the pipeline and restarting execution at an address which would have been executed if the unconditional branch had not been executed (7020), in the event that said conditional branch instruction determines that the unconditional branch instruction should not have been taken.

4. The method of claim 3 further comprising:

executing said unconditional branch instruction (7012) as a microinstruction;

writing said sequence of instructions into a pipeline as microinstructions (7013,7014); and,

executing said conditional branch instruction as a microinstruction.

5. The method of claim 3 further comprising;
writing results from said pipeline into memory in the event that said conditional branch instruction determines that said unconditional branch should have been taken (7019).

6. A method of implementing a conditional branch instruction, characterized in that:
executing an unconditional branch (7012) to a new instruction sequence, and saving an old address (7012), said old address being the first executable address in the absence of said unconditional branch instruction;
executing a conditional branch instruction (7015);
continuing execution of said new instruction sequence (7019) when a condition is determined by said conditional branch instruction to have a first logical value, or continuing execution at said old address (7020) when said condition is determined to have a second logical value.

7. The method as in claim 6 further comprising:
trapping (7020,82) said new instruction sequence in the event that said condition is determined to have said second logical value and execution continues at said old address.

8. The method as in claim 7 further comprising:
discarding (7020) said new instruction sequence and results obtained therefrom in the event that said condition is determined to have said second logical value.

9. The method as in claim 6 wherein said first logical value is true (7019).

10. The method as in claim 6 wherein said second logical value is false (7020).

11. A method of implementing a conditional branch macroinstruction, characterized in that:
executing an unconditional branch micro-instruction (7012) to a new micro-instruction sequence, and saving an old address (7012), said old address being the first executable address in the absence of said unconditional branch micro-instruction;
executing a conditional branch micro-instruction (7015);
continuing execution of said new micro-instruction sequence (7019) when a condition is determined by said conditional branch micro-instruction to have a first logical value, or continuing execution at said old address (7020) when said condition is determined to have a second logical value.

12. The method as in claim 11 further comprising:
fetching said new micro-instruction sequence from memory (34);
placing said new micro-instruction sequence in a pipeline (7013,7014,7015).

13. The method as in claim 11 further comprising:
trapping (7020,82) said new micro-instruction sequence in response to said condition having said second logical value to discard results obtained from said new micro-instruction sequence.

14. A computer to execute a macro-instruction conditional branch instruction, characterized in that:
means for executing an unconditional branch instruction (31,33);
means for beginning execution of a sequence of instructions from said unconditional branch instruction (31,33,82,7020), responsive to a conditional branch instruction (7015) subsequently determining that the unconditional branch should not have been taken, for aborting results from said sequence of instructions and for restarting execution at an address which would have been executed if the unconditional branch had not been executed.

15. The apparatus as in claim 14 wherein said unconditional branch instruction is a microinstruction (7012), said sequence of instructions are pipelined microinstructions (7013,7014), and said conditional branch instruction is a microinstruction.

16. The apparatus as in claim 14 further comprising:
means (31,33,7019) for writing results from said sequence of instructions into memory in the event that said conditional branch instruction determines that said unconditional branch should have been taken.

17. A computer system implementing a conditional branch instruction, characterized in that:
means for executing an unconditional branch (7012) to a new instruction sequence (7013,7014), and saving an old address (7012), said old address being the first executable address in the absence of said unconditional branch instruction;
means for executing a conditional branch instruction (7015); means for continuing execution of said new instruction sequence (7019) when a condition is determined by said conditional branch instruction to have a first logical value, or continuing execution at said old address (7020) when said condition is determined to have a second logical value.

18. The apparatus as in claim 17 comprising:

means for trapping (7020,82) said new instruction sequence in the event that said condition is determined to have said second logical value and execution continues at said old address (7012), and to discard results of execution of said new instruction sequence (7020).

19. The apparatus as in claim 17, comprising:

means for writing to memory results of said new instruction sequence (7019,31,33) in the event that said condition is determined to have said first logical value, indicating that said unconditional branch should have been taken.

20. The apparatus as in claim 17 wherein said first logical value is true (7018,7019).

21. The apparatus as in claim 17 wherein said second logical value is false (7020).

22. An apparatus for implementing a conditional branch macro-instruction comprising, characterized in that:

means for executing an unconditional branch micro-instruction (7012) to a new micro-instruction sequence, and saving an old address (7012), said old address being the first executable address in the absence of said unconditional branch micro-instruction;

means for executing a conditional branch micro-instruction (7015);

means for continuing execution of said new micro-instruction sequence (7019) when a condition is determined by said conditional branch micro-instruction to have a first logical value, or continuing execution at said old address (7020) when said condition is determined to have a second logical value.

23. The apparatus as in claim 22 further comprising:

means for fetching (31,33) said new micro-instruction sequence from memory;

means for placing said new micro-instruction sequence in a pipeline (7013,7014,7015) of overlapped micro-instructions.

24. An apparatus for implementing a conditional branch macro-instruction characterized in that:

means for executing an unconditional branch micro-instruction (7012) to a new micro-instruction sequence, and saving an old address (7012), said old address being the first executable address in the absence of said unconditional branch micro-instruction;

means for placing said new micro-instruction sequence in a pipeline;

means for executing a conditional branch micro-instruction (7015);

means for continuing execution of said new micro-instruction sequence (7019) in said pipeline when a condition is determined by said conditional branch micro-instruction to have a first logical value, or continuing execution at said old address (7020) when said condition is determined to have a second logical value; and,

means for trapping (7020,82) said new instruction sequence in the event that said condition is determined to have said second logical value and execution continues at said old address, and to discard results of execution of said new instruction sequence.

FIG. 1

FIG. 2a

FIG. 2b

## FIG. 2c

| $T_0{}'$ | $t_7$ |
|---|---|

| INSTRUCTION #1 |
|:---:|

| $A_1$ | $B_1$ | $C_1$ | $D_1$ |
|:---:|:---:|:---:|:---:|

| INSTRUCTION #2 |
|:---:|

| $A_2$ | $B_2$ | $C_2$ | $D_2$ |
|:---:|:---:|:---:|:---:|

| INSTRUCTION #3 |
|:---:|

| $A_3$ | $B_3$ | $C_3$ | $D_3$ |
|:---:|:---:|:---:|:---:|

$t_0$   $t_0$   $t_0$   $t_0$   $t_0$

## FIG. 3

10

INSTRUCTION SUB UNIT — 31

CACHE MEMORY SUB UNIT — 34

33

CONTROL UNIT — 32

SYSTEM BUS

UNCONDITIONAL
BRANCH INSTRUCTION ┌─ 4010

(NO OPERATION) ┌─ 4011

(NO OPERATION) ┌─ 4012

(NO OPERATION) ┌─ 4013

END INSTRUCTION ┌─ 4014

NEW INSTRUCTION
SEQUENCE ┌─ 4015

# FIG. 4

FIG. 5

FIG. 7

CONDITIONAL BRANCH INSTRUCTION — 6010

CONDITION DETERMINATION

ORIGINAL INSTRUCTION SEQUENCE — 6011

ORIGINAL INSTRUCTION SEQUENCE — 6012

6013 — ORIGINAL INSTRUCTION SEQUENCE

6014 — ORIGINAL INSTRUCTION SEQUENCE

CONDITION FALSE

CANCEL ORIGINAL SEQUENCE

OR      6015

END INSTRUCTION BRANCH TRAP ROUTINE CANCEL ORIGINAL SEQUENCE

CONDITION TRUE

NEW INSTRUCTION SEQUENCE

6016

FIG. 6

FIG.8a

FIG. 8b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 138 470 (TANDEM COMPUTERS INC.) 24 April 1985<br>* page 1, line 13 - page 2, line 1; page 4, lines 1-13; page 4, line 28 - page 5, line 30; page 6, lines 15-19; page 8, lines 2-18; page 9, lines 8-15 * | 1-24 | G06F9/38 |
| A | 8th Annual Symposium on Computer Architecture, May 12-14, 1981, Minneapolis, US, J.E. SMITH : " A study of branch prediction strategies", pages 135-148<br>*page 136, right column, lines 3-11; page 137, left column, lines 24-34 * | 1,3,6, 11,17, 22,24 | |
| A | J.E THORNTON: "Design of a computer The Control Data 6600" ,Scott, Foresman and Co., 1970, pages 111-116<br>* page 113, lines 23-30; page 114, lines 14-18 * | 1,6,11, 17,22,24 | |

TECHNICAL FIELDS SEARCHED (Int. Cl.4)

G06F

The present search report has been drawn up for all claims

| Place of search | Date of completion of the search | Examiner |
|---|---|---|
| THE HAGUE | 18 JUNE 1992 | WEINBERG L.F. |